# EUROPÄISCHE PATENTANMELDUNG

(11) **EP 2 045 219 A1**
(43) Veröffentlichungstag der Anmeldung: **08.04.2009**
(21) Anmeldenummer: 07117942.8
(22) Anmeldetag: 05.10.2007
(51) Int. Cl.: C04B 14/36, C04B 28/14

(54) **Verfahren zur Herstellung einer Bauplatte auf Calciumsulfat-Bariumsulfat-Basis**

(71) Anmelder: Knauf Gips KG, 97346 Iphofen (DE)
(72) Erfinder: Krämer, Georg, Dr., 99734 Nordhausen (DE); Scheller, Lothar, Dr., 97346 Iphofen (DE); Vogel, Petra, 97359 Schwarzach (DE); Grebner, Gosbert, 97320 Albertshofen (DE); Hummel, Hans-Ulrich, Prof., 97346 Iphofen (DE)
(74) Vertreter: Schreiber, Christoph

(57) **Zusammenfassung**

Verfahren zur Herstellung einer Strahlenschutzplatte auf Basis von Gips mit folgenden Schritten:
- Bereitstellen von pulverförmigem, abbindefähigem Stuckgips in einer Korngröße d50 zwischen 30 und 50 µm
- Bereitstellen von pulverförmigem Bariumsulfat mit einer Korngröße d50 zwischen 5 und 15 µm
- Vermischen des pulverförmigen Stuckgips und des pulverförmigen Bariumsulfats
- Vermischen der Pulvermischung mit Wasser, so dass ein Wasser-Feststoffverhältnis von 0,50 bis 0,60, erreicht wird
- Formen einer Gipsplatte mit einer üblichen Gipsplattenproduktionsanlage.

## Beschreibung

Die vorliegende Erfindung betrifft ein Verfahren zur Herstellung von Strahlenschutzplatten.

Zum Schutz gegen elektromagnetische Strahlen werden zumindest in Krankenhaus aber auch im Industriebereich die Wände von Räumen, in denen beispielsweise Röntgengeräte stehen, mit einer Verkleidung versehen, beispielsweise auf Basis einer Bleifolie, die als gesonderte Lage oder in Form von Verbundelementen mit Bleikaschierung eingesetzt werden. Bleifolien sind sehr teuer und gesundheitsschädigend. Die Verbundplatten lassen sich nur schlecht verarbeiten, insbesondere die Plattenablängung ist kompliziert. Zudem sind entsprechende Platten schwer. Da die Bleifolien nur eine sehr geringe Dicke haben, sind diese gegen Beschädigungen besonders empfindlich, so dass undichte Bereiche entstehen können. Grundsätzlich kennt der Fachmann auch Gipsplatten, die als Strahlenschutzplatten eingesetzt werden können.

Die DE 36 07 190 beschreibt eine Gipsplatte und deren Verwendung als Strahlenschutzplatte, wobei Gips und Barium oder Baryt, gegebenenfalls zusammen mit Bleioxid zur Herstellung verwendet werden. Hierzu wird beschrieben, dass Gips und Baryt in gleicher Körnung vermischt werden, insbesondere, dass Gips und Baryt gemeinsam gemahlen werden.

Während Gips eine Dichte im Bereich von etwa 2,6 bis 2,7 g/cm³ hat, hat Bariumsulfat eine Dichte von etwa 4,3 g/cm³. Dies macht das Vermischen der beiden Mineralien schwierig.

Bariumsulfat ist ein wesentlich härteres Mineral, so dass bei Verwendung des in der DE 36 07 190 beschriebenen Verfahrens der Gips immer feiner gemahlen wird, während sich die Korngröße des Bariumsulfates kaum verändert.

Feingemahlener Gips benötigt zur Herstellung des Gipsbreis besonders viel Wasser, was eine großtechnische Produktion schwierig macht, da auf einer üblichen Gipsplattenanlage der Gipsbrei in kurzer Zeit soweit abbinden muss, dass die Platte geschnitten werden kann und außerdem Zeit und Temperatur für die Trocknung begrenzt sind.

Großtechnisch konnte daher eine Platte nach dem Verfahren der DE 36 07 190 nicht hergestellt werden.

Aufgabe der Erfindung war es ein Verfahren bereitzustellen, mit dem entsprechende Platten ohne Verlust typischer Platteneigenschaften wie beispielsweise Biegezugfestigkeit, Feuerbeständigkeit, einfache Verarbeitbarkeit, vergleichbar zu Platten ohne Bariumsulfatzusatz, aber mit hoher Strahlenabsorption industriell gefertigt werden können.

Gelöst wird die Aufgabe durch ein Verfahren mit folgenden Schritten:
- Bereitstellen von pulverförmigem, abbindefähigem Stuckgips in einer Korngröße d50 zwischen 30 und 50 µm
- Bereitstellen von pulverförmigem Bariumsulfat mit einer Korngröße d50 zwischen 5 und 15 µm
- Vermischen des pulverförmigen Stuckgips und des pulverförmigen Bariumsulfats
- Vermischen der Pulvermischung mit Wasser, so dass ein Wasser-Feststoffverhältnis (w/w) von 0,50 bis 0,60, bevorzugt 0,52 bis 0,54 erreicht wird
- Formen einer Gipsplatte mit einer üblichen Gipsplattenproduktionsanlage.

Bariumsulfat ist ein Produkt, das durch eine Fällungsreaktion hergestellt wird und daher zum einen eine uneinheitliche und zum anderen eine geringe Korngröße aufweist. Versuche, einen Stuckgips mit ähnlicher Korngrößenverteilung einzusetzen, führten zu einem besonders hohen Wasserbedarf, um einen einheitlichen Gipsbrei zu erreichen. Die entsprechenden Platten banden dann nicht hinreichend auf den Bandstraßen ab und ergaben Probleme beim Schneiden. Darüber hinaus konnte die notwendige Trocknung nicht erreicht werden.

Erst durch die erfindungsgemäße Verwendung von Stuckgips größerer Korngröße konnten die Probleme überwunden werden. Auf diesem Wege konnte die Pulvermischung mit Wasser gemischt werden, dass ein Wasser-Feststoffverhältnis von 0,50 bis 0,60, bevorzugt 0,52 bis 0,54 erreicht werden konnte. Der entsprechende Gips/Bariumsulfatbrei zeigt ein hinreichendes Abbindeverhalten um auf einer üblichen Gipsplattenproduktionsanlage geschnitten und anschließend getrocknet zu werden.

Der Anteil an Bariumsulfat in der Platte bestimmt die Strahlenschutzeigenschaften. Je mehr Bariumsulfat bezogen auf die Plattenfläche sich in der Platte befindet, desto besser ist die Strahlenschutzwirkung. Anderseits werden dadurch grundsätzlich die Baustoffeigenschaften wie Verarbeitbarkeit, Festigkeit und Brandverhalten negativ beeinflusst. Zu bedenken ist, dass Bariumsulfat im Gegensatz zu Gips keine Bindemitteleigenschaften aufweist.

Gute Ergebnisse bezogen auf alle Eigenschaften konnten insbesondere erzielt werden, wenn das Verhältnis Stuckgips zu Bariumsulfat zwischen 50:50 und 30:70 liegt, wobei ein Anteil von 55 bis 65 Gew.-% Bariumsulfat bevorzugt wird. Die Gewichtsverhältnisse werden gemessen als CaSO₄ x ½ H₂O:BaSO₄.

In einer Ausführungsform der Erfindung erfolgt eine Zugabe von Fasern, insbesondere Kurzglasfasern, um die Stabilität der Platten in Brandfällen zu erhöhen, wobei ein Anteil an Fasern zwischen 0,2 und 0,4 Gew.-% vom Gewicht Stuckgips plus Bariumsulfat ein optimales Ergebnis bringt. Solche Kurzglasfasern sind beispielsweise von der Firma Owens Corning unter der Typenbezeichnung Advantex erhältlich. Besonders geeignete Faserdurchmesser liegen bei 10 bis 20 µm, besonders geeignete Faserlängen bei 3 bis 20 mm.

Erfindungsgemäß hat sich gezeigt, dass es zu bevorzugen ist, wenn Stuckgips und Bariumsulfat erst kurz vor der Herstellung des Gipsbreis miteinander vermischt werden. Werden die beiden Pulver vorgemischt, kommt es durch die Dichteunterschiede zu einer Trennung aufgrund der Schwerkraft. Zusätzlich wirken sich die unterschiedliche Korngrößenverteilungen beim Mischen negativ aus.

Zu bedenken ist, dass die Herstellung einer Gipsplatte kontinuierlich erfolgt, d.h. es muss ein Weg gefunden werden, mit dem kontinuierlich Gipsbrei mit stabilem Gehalt an Bariumsulfat produziert werden kann.

In einer bevorzugten Form hat es sich als besonders geeignet erwiesen, den Stuckgips mittels einer Bandwaage zu dosieren und in Abhängigkeit vom Wägeergebnis für den Stuckgips, Bariumsulfat zuzuwägen. Alternativ kann auch erst Bariumsulfat vorgelegt werden und dann Stuckgips zudosiert werden.

Es ist selbstverständlich für die Funktionsweise der Platten erforderlich, dass das Bariumsulfat gleichmäßig in allen Platten vorliegt.

In einer besonders bevorzugten Ausführungsform wird daher in einem weiteren Schritt, abhängig von der Bariumsulfatdosierung ein Farbpigment zudosiert, so dass aus dem Grad der Einfärbung auf die korrekte Konzentration Bariumsulfat geschlossen werden kann.

Die Strahlenschutzplatte kann eine kartonummantelte Gipsplatte sein. Es kann sich jedoch auch um eine Gipsplatte handelt, bei der der Kern mit einem Vlies ummantelt ist.

Gegenstand der Erfindung ist weiterhin die durch das Verfahren erhältliche Platte.

### Beispiel 1

Mit 12,5 mm dicken kartonummantelten Gipsplatten erfindungsgemäß hergestellt aus 40% Bindegips (CaSO₄ x ½ H₂O) und 60% Bariumsulfat (BaSO₄) wurde ein Bleigleichwert in Abhängigkeit von der Röhrenspannung der Röntgengeräte in folgender Größe erreicht:

| | | | | |
|---|---|---|---|---|
| Röhrenspannung | 80 KV | - | Bleigleichwert | 1 mm |
| Röhrenspannung | 100 KV | - | Bleigleichwert | 0,5 mm |
| Röhrenspannung | 150 KV | - | Bleigleichwert | 0,3 mm |

Biegezug- und Schlagfestigkeit entsprachen denen der Platten mit 100% Bindegips. Die Platten waren nicht brennbar. Sie ließen sich schneiden und brechen wie normale kartonummantelte Gipsplatten. Die Plattenmasse betrug ca. 16,5 kg/m²

### Beispiel 2

Platten nach Beispiel 1, jedoch mit zusätzlich 0,3 Gew.-% Kurzglasfasern Owens Corning, Typ ADVANTEX erreichten eine hohe Stabilität und Gefügezusammenhalt im Brandfall. Der Faserdurchmesser liegt bei diesem Produkt bei 16 µm, die Faserlänge zwischen 4 und 16 mm. Mit vier Platten à 12,5 mm, Gesamtdicke 50 mm, konnten feuerbeständige Trennwände erstellt werden. Dieser Aufbau ergab einen Bleigleichwert bei

| | | | | |
|---|---|---|---|---|
| Röhrenspannung | 100 KV | - | Bleigleichwert | 1,9 mm |
| Röhrenspannung | 150 KV | - | Bleigleichwert | 1,3 mm |

### Beispiel 3

Eine Platte nach Beispiel 2, jedoch mit einer Glasvliesummantelung brachte gegenüber der kartonummantelte Platte bei gleicher Strahlenabsorption eine noch bessere Stabilität im Brandfall. Außerdem wurde damit die Brennbarkeitsklasse A1 erreicht (nicht brennbar).

## Patentansprüche

1. Verfahren zur Herstellung einer Strahlenschutzplatte auf Basis von Gips mit folgenden Schritten:
- Bereitstellen von pulverförmigem, abbindefähigem Stuckgips in einer Korngröße d50 zwischen 30 und 50 µm
- Bereitstellen von pulverförmigem Bariumsulfat mit einer Korngröße d50 zwischen 5 und 15 µm
- Vermischen des pulverförmigen Stuckgips und des pulverförmigen Bariumsulfats
- Vermischen der Pulvermischung mit Wasser, so dass ein Wasser-Feststoffverhältnis von 0,50 bis 0,60 erreicht wird
- Formen einer Gipsplatte mit einer üblichen Gipsplattenproduktionsanlage.

2. Verfahren nach Anspruch 1, **dadurch gekennzeichnet, dass** das Gewichtsverhältnis zwischen Stuckgips und Bariumsulfat, bezogen auf das Gewicht 50:50 bis 50:70 beträgt.

3. Verfahren nach einem der Ansprüche 1 oder 2, **dadurch gekennzeichnet, dass** Stuckgips und Bariumsulfat getrennt bevorratet werden und der Herstellungsprozess der Gipsplatten kontinuierlich erfolgt.

4. Verfahren nach mindestens einem der Ansprüche 1 bis 3, **dadurch gekennzeichnet, dass** das Gewichtsverhältnis von Stuckgips und Bariumsulfat mittels einer Bandwaage eingestellt wird.

5. Verfahren nach mindestens einem der Ansprüche 1 bis 4, **dadurch gekennzeichnet, dass** das Gemisch zusätzlich einen Farbstoff enthält.

6. Verfahren nach einem der Ansprüche 1 bis 5, **dadurch gekennzeichnet, dass** zusätzlich Fasern, insbesondere Kurzglasfasern zugesetzt werden.

7. Strahlenschutzplatte hergestellt durch ein Verfahren nach mindestens einem der Ansprüche 1 bis 6.
